# EUROPEAN PATENT APPLICATION

(11) **EP 2 851 776 A1**
(43) Date of publication of application: **25.03.2015**
(21) Application number: 14003046.1
(22) Date of filing: 03.09.2014
(51) Int. Cl.: G06F 3/0488

(54) **Information processing device with a touch screen, control method and program**

(30) Priority: 04.09.2013 JP 2013183456
(71) Applicant: NEC Personal Computers, Ltd., Shinagawa-ku Tokyo 141-0032 (JP)
(72) Inventor: Yagi, Yasunari, Tokyo, 1410032 (JP); Yamanaka, Yuko, Tokyo, 1410032 (JP)
(74) Representative: Kador & Partner

(57) **Abstract**

An information processor includes a display section for displaying a result of information processing, a contact detecting section for detecting a contact position in the display section, a first area display section for displaying a first area in the display section, a second area display section for displaying second areas, while contact with the first area is being detected by the contact detecting section, in a periphery of the first area in the display section, the second areas being obtained by dividing the periphery into a predetermined number of areas, a processing execution section for executing processing when the contact detecting section detects contact with the first area and contact with the second area in succession and detects breaking of contact with the second area, the processing corresponding to coordinates of a position in the second area at which the breaking of contact with the second area is detected.

## Description

### BACKGROUND OF THE INVENTION

### Field of the Invention

The present invention relates to an information processor, a control method, and a program.

### Description of the Prior Art

Recently, information processors representatively including a smart phone, a cellular phone, an electronic information terminal, a Personal Digital Assistant (PDA), a notebook Personal Computer (PC), and a tablet PC are rapidly coming into wide use. Some information processors include a display equipped with a touch panel function to improve operability. In the display including the touch panel function, the display area is also used as the touch area in general. Further, personal computers in a construction capable of changing the operation mode between the notebook mode and the tablet mode are also coming into broad use.

In an information processor on which a display including the touch panel function is mounted, gesture of a finger or a stylus pen is detected via a touch panel display. The information processor operates according to the gesture thus detected. The basic operation of the information processor is implemented by an Operating System (OS) such as Windows (registered trademark) installed in the information processor.

In a tablet PC, the liquid-crystal display as a display thereof includes the touch panel function. Hence, information can be inputted without using a hardware keyboard and the like. In such tablet PC, information pieces such as letters and characters are mainly inputted via the touch panel. That is, the PC has a high degree of freedom with respect to the size and the shape of the PC itself. This leads to an advantage of superior browsing performance in presenting information on the display.

Heretofore, the information processors such as personal computers have primarily processed data of characters inputted from hardware keyboards. In processing of images, the mouse has been primarily employed. Recently, tablet PCs capable of conducting the pen input operation are increasingly used. The tablet PCs are devised in consideration of the image of a pen and a sheet of paper for use in the daily life. That is, the tablet PCs include no hardware keyboard. In the tablet PCs, in addition to the input of images and drawings, the character input is possible through operation similar to the operation to write characters on a sheet of paper. Hence, the tablet PCs are familiar tools for the users of the generation who are familiar with the tablet PCs and who have not a long experience of the character input operation from the hardware keyboard.

The tablet PCs provide a particular input operation called "pinch out" in which pointers are dragged in mutually opposing directions to be apart from each other to widen an area surrounded by pointers, to thereby display a magnified image. Such multi-touch operations include flick, swipe, and pinch-in. The flick is an operation in which an operation to click a pointer and an operation to move a pointer are simultaneously carried out. The swipe indicates an operation to be used, for example, in the screen scrolling operation such that after the pointer is removed from the tablet, the screen scrolling continues. The pinch-in is an operation reverse to the pinch-out. When the pointers are dragged in the direction to approach each other, the area surrounded by pointers is reduced, to thereby display a contracted image.

In the tablet PC including a touch panel display to input handwritten letters, the operation to input letters from a keyboard (software keyboard) displayed as an image on the touch panel display is employed together with the operation to input handwritten letters depending on cases. The software keyboard is a keyboard image presented on the display in which key images corresponding to the Japanese cursive syllabary or hiragana or the angular Japanese phonic syllabary or katakana and alphabetic letters are arranged in predetermined orders, specifically, in the order of the Japanese syllabary and the alphabetic order. When a key on the keyboard image thus displayed is indicated by a pointing device, the function of the key is implemented like when a key is depressed in the hardware keyboard.

According to this technique, in place of the use of the hardware keyboard and the mouse as in the PCs of the prior art, there is provided a method of inputting sentences in which characters and letters are inputted through the handwritten letter recognition or by use of the software keyboard on the screen. However, the letter input speed in the handwritten letter recognition is restricted by, for example, the input speed of handwritten letters and the recognition error correction by the PC at erroneous recognition of handwritten letters. In the character input method using the software keyboard, it is required to correctly and continuously input letters from the small software keyboard displayed on the screen. This leads to a problem that the operation to input letters and to convert the letters takes a long period of time and causes fatigue of user's optic nerves.

Under these circumstances, Japanese Patent Pub. No. 3546337 describes a computer display device in which when the user drags a pen into a quadrant on the upper-right side of a first menu to select a paste menu, and then drags, without lifting the pen from the screen, the pen into the lower quadrant of a second menu to select the clip board C menu, there is conducted an operation to paste data (to insert data in a target document) from a clip board called clip board C. When the second menu is displayed, the first menu vanishes from the screen.

Further, Japanese Patent Pub. No. 5219152 describes an input device in which a radial control menu includes a plurality of wedges. Each wedge is defined by a maximum boundary representing a maximum value and a minimum boundary representing a minimum value. To a variable corresponding to the wedge, the user can set a desired value. For example, when wedge A represents a variable of lightness, it is possible to set the lightness variable to a value between 100% represented by the maximum boundary 14 and 0% represented by the minimum boundary 16. To feed the value of the variable set between the maximum value and the minimum value back to the user, a mobile indicator is disposed for each wedge. Each mobile indicator is a line extending in the radial direction from the origin of the radial control menu to each wedge.

Japanese Patent Laid-Open Ser. No. 2012-221298 describes an input device for use with a tablet PC to be operated through finger touching operation. In the input device, a peripheral area of an arbitrary touch position A in a row detection area is subdivided into eight areas centered on the touch position A. In response to a contacting operation of the touch having a moving direction from the touch position A to an area, a row is identified.

However, in the conventional tablet PC, most information pieces such as characters are basically inputted by the dominant hand of the user as described above. This leads to a fundamental problem of insufficient operability from the viewpoint of easiness of high-speed input operation when compared with the hardware keyboard of the conventional input tool in which both hands are used to input data items of characters.

The techniques described in the Japanese Patent Pub. No. 3546337, Japanese Patent Pub. No. 5219152, and Japanese Patent Laid-Open Ser. No. 2012-221298 are devised by basically assuming that all operations are carried out only by the dominant hand of the user although they differ from each other in the input operation, specifically, whether the user employs the touch pen or fingers. Due to adoption of the touch panel display, there appears a problem of the loss of comfortable operability obtained when the operation is conducted at a high speed with both hands on the hardware keyboard.

### SUMMARY OF THE INVENTION

It is therefore an object of the present invention, which has been made in consideration of the problems above, to provide an information processor, a control method, and a program wherein in an information processor including a touch panel display, it is possible, by adding input operations associated with primary input operations, to improve operability based on intuitive operation of the tablet terminal.

In one or more embodiments of the present invention, an information processor including:
a display section for displaying a result of information processing;
a contact detecting section for detecting a contact position in the display section;
first area display means for displaying a first area in the display section;
second area display means for displaying second areas, while contact with the first area is being detected by the contact detecting section, in a periphery of the first area in the display section, the second areas being obtained by dividing the periphery into a predetermined number of areas; and
processing execution means for executing processing when the contact detecting section detects contact with the first area and contact with the second area in succession and detects breaking of contact with the second area, the processing corresponding to coordinates of a position in the second area at which the breaking of contact with the second area is detected.

In one or more embodiments of the present invention, there is provided a control method for use with an information processor including a display section for displaying a result of information processing, including the steps of:
detecting a contact position in the display section;
displaying a first area in the display section;
displaying second areas, while contact with the first area is being detected by the contact detecting step, in a periphery of the first area in the display section, the second areas being obtained by dividing the periphery into a predetermined number of areas; and
executing processing when the contact detecting step detects contact with the first area and contact with the second area in succession and detects breaking of contact with the second area, the processing corresponding to coordinates of a position in the second area at which the breaking of contact with the second area is detected.

In one or more embodiments of the present invention, there is provided a program for making a computer of an information processor including a display section for displaying a result of information processing execute:
processing for detecting a contact position in the display section;
processing for displaying a first area in the display section;
processing for displaying second areas, while contact with the first area is being detected by the processing for detecting a contact position, in a periphery of the first area in the display section, the second areas being obtained by dividing the periphery into a predetermined number of areas; and
processing for executing processing when the processing for detecting a contact position detects contact with the first area and contact with the second area in succession and detects breaking of contact with the second area, the processing corresponding to coordinates of a position in the second area at which the breaking of contact with the second area is detected.

In accordance with the present invention, there are provided an information processor, a control method, and a program wherein it is possible to improve operability based on intuitive operation of the tablet terminal.

### BRIEF DESCRIPTION OF THE DRAWINGS

The objects and features of the present invention will become more apparent from the consideration of the following detailed description taken in conjunction with the accompanying drawings in which:
FIG. 1 is a schematic block diagram to explain a configuration of an information processor in an embodiment of the present invention;
FIG. 2 is a diagram to explain a situation in which a flick section is displayed on the left side of the touch panel display of the information processor in the embodiment;
FIG. 3 is a diagram to explain a situation in which a flick section is displayed on the right side of the touch panel display of the information processor in the embodiment;
FIG. 4 is a diagram to explain the flick section of the information processor in the embodiment;
FIG. 5 is a diagram (1) to explain a display example of an operation menu displayed in response to an operation to hold a tapped state in the flick section of the information processor in the embodiment;
FIG. 6 is a diagram (2) to explain a display example of an operation menu displayed in response to an operation to hold a tapped state in the flick section of the information processor;
FIG. 7 is a diagram (3) to explain a display example of an operation menu displayed in response to an operation to hold a tapped state in the flick section of the information processor;
FIG. 8 is a diagram (4) to explain a display example of an operation menu displayed in response to an operation to hold a tapped state in the flick section of the information processor;
FIG. 9 is a diagram (5) to explain a display example of an operation menu displayed in response to an operation to hold a tapped state in the flick section of the information processor; and
FIG. 10 is a flowchart to explain an operation of the information processor in the embodiment.

### DESCRIPTION OF THE EMBODIMENTS

Referring next to the drawings, description will be given of one or more embodiments of the present invention. In the drawings, the same or corresponding constituent components are assigned with the same reference numerals, and description will be briefly given of such components or description thereof will be avoided according to necessity. In accordance with the present invention, it is possible to improve operability based on intuitive operation of the tablet terminal by including:
a display section for displaying a result of information processing;
a contact detecting section for detecting a contact position in the display section;
a first area display section for displaying a first area in the display section;
a second area display section for displaying second areas, while contact with the first area is being detected by the contact detecting section, in a periphery of the first area in the display section, the second areas being obtained by dividing the periphery into a predetermined number of areas; and
a processing execution section for executing processing when the contact detecting section detects contact with the first area and contact with the second area in succession and detects breaking of contact with the second area, the processing corresponding to coordinates of a position in the second area at which the breaking of contact with the second area is detected.

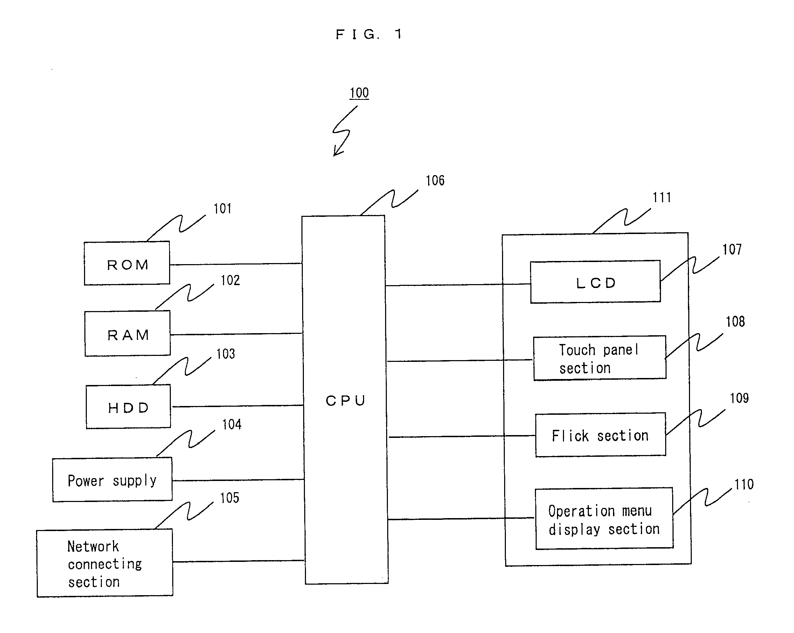

Referring now to FIG. 1, description will be given of a configuration of the information processor in an embodiment of the present invention. FIG. 1 shows the configuration of the information processor in a schematic block diagram. In FIG. 1, the information processor of the present invention is an information processor, for example, an electronic information terminal, a Personal Digital Assistant (PDA), a notebook PC, a tablet PC, or the like.

The configuration shown in FIG. 1 includes an information processor (to be referred to also as a personal computer (PC) hereinbelow) 100. The PC includes a Read Only Memory (ROM) 101, a Random Access Memory (RAM) 102, a Hard Disk Drive (HDD) 103, a power supply 104, a network connecting section 105, a Central Processing Unit (CPU) 106, and a touch panel display 111.

The ROM 101 is employed to store therein programs to control overall operation of the personal computer 100. The RAM 102 is a storage area in which programs stored in the ROM 101 are to be loaded. The HDD 103 is used to store therein application software of the personal computer 100 and to record therein contents such as Television (TV) programs received by a TV tuner, not shown. The power supply 104 supplies Alternating Current (AC) power or Direct Current (DC) to the personal computer 100. The network connecting section 105 is connected to networks such as internet, not shown, to serve as an interface for the networks. The CPU 106 controls the overall operation of the personal computer 100 and loads in a memory a control program stored in the ROM 101 and develops in the RAM 102 various data items obtained through operations of the personal computer 100.

The touch panel display 111 includes a Liquid Crystal Display (LCD) 107, a touch panel section 108, a flick section 109, and an operation menu display section 110. The LCD 107 configures a device to display results of information processing executed by the personal computer 100. The touch panel 108 provides a contact input function. Specifically, when the touch panel 108 senses pressure, static electricity, or the like applied thereto through input operations by a finger, a stylus pen, or the like, it supplies data of the pressure to the CPU 106. In the personal computer 100, input operations can be conducted by use of the touch panel section 108 in place of the operation input devices such as the hardware keyboard and the touch pad. Specifically, data items and commands can be inputted through an operation in which characters are directly written by bringing a finger or a stylus pen, not shown, into contact with the touch panel 108.

The flick section 109 is a tool to conduct a flick operation and is kept displayed in any situation on the right or left side of the touch display panel 111, which will be described later. In the operation menu display section 110, when an operation to retain or hold a tapped (contact) state of a flick button is carried out in the flick section 109, which will be described later, flick commands (operation menu) are displayed in a peripheral area of the flick button by dividing the area into a predetermined number of subareas. When the user leaves the finger from the flick button, the flick commands (operation menu) vanish from the screen.

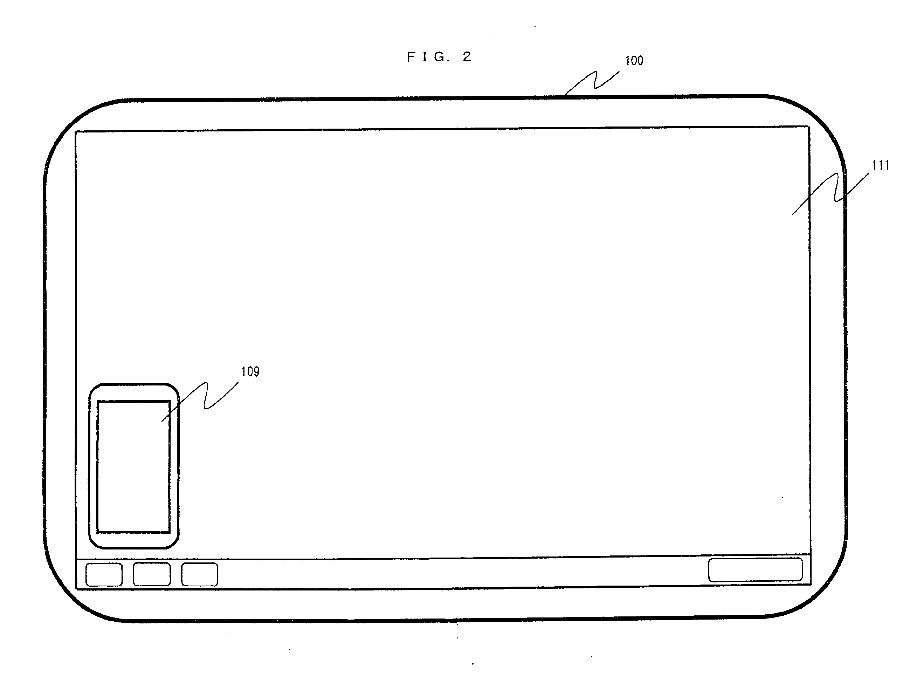

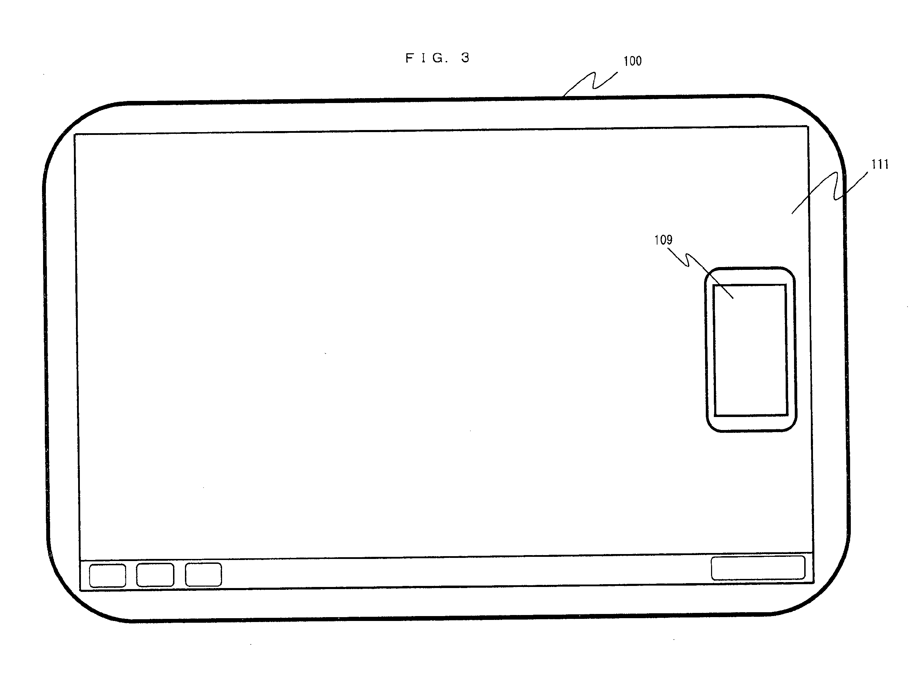

Next, referring to FIGS. 2 and 3, description will be given of a situation in which the flick section is presented on the touch panel display of the information processor. FIG. 2 schematically shows a situation in which the flick section is displayed on the left side of the touch panel display 111 of the information processor. FIG. 3 schematically shows a situation in which the flick section is displayed on the right side of the touch panel display 111 of the information processor.

In the personal computer 100 placed in the landscape orientation, the flick section 109 is kept displayed in any situation on the lower-left area (in FIG. 2) or at substantially a central position on the right side (in FIG. 3) in substantially the rectangular touch panel display 111. The flick section 109 is displayed to be available without causing any uncomfortable feeling regardless of the display position thereof and is designed to be independent of the utilization state and the dominant hand of the user. According to the allocation of icons and windows on the touch panel display 111, the flick section 109 may be placed on the right or left side not to hinder the icons and windows.

Depending on the utilization state, it is possible for the user to change the display position of the flick section 109 by a single operation of a button. Although it is assumed in the description that the flick section 109 is placed on the left or right side as shown in FIG. 2 or 3, the flick section 109 may be placed at a position on the touch panel display 111 suitable for operations of the user, for example, near the upper side or the lower side of the touch panel display 111. That is, the flick section 109 is flexibly placed at an appropriate position on the touch panel display 111.

As a result, it is possible that for example, the right-handed user operates icons and windows as main or primary operations on the touch panel display 111 by fingers of the right hand and operates the flick section 109 placed on the left side of the touch panel display 111 as subordinate or cooperative operations by fingers of the left hand. In contrast, it is possible that the left-handed user operates icons and windows as main operations on the touch panel display 111 by fingers of the left hand and operates the flick section 109 placed on the right side of the touch panel display 111 as subordinate operations by fingers of the right hand.

The flick section 109 is kept presented on the touch panel display 111 in any situation. Hence, icons and the like concealed by the flick section 109 on the touch panel display 111 are not easily recognized in some cases. To prevent the disadvantageous situation, the flick section 109 may be presented as a semitransparent image on the touch panel display 111.

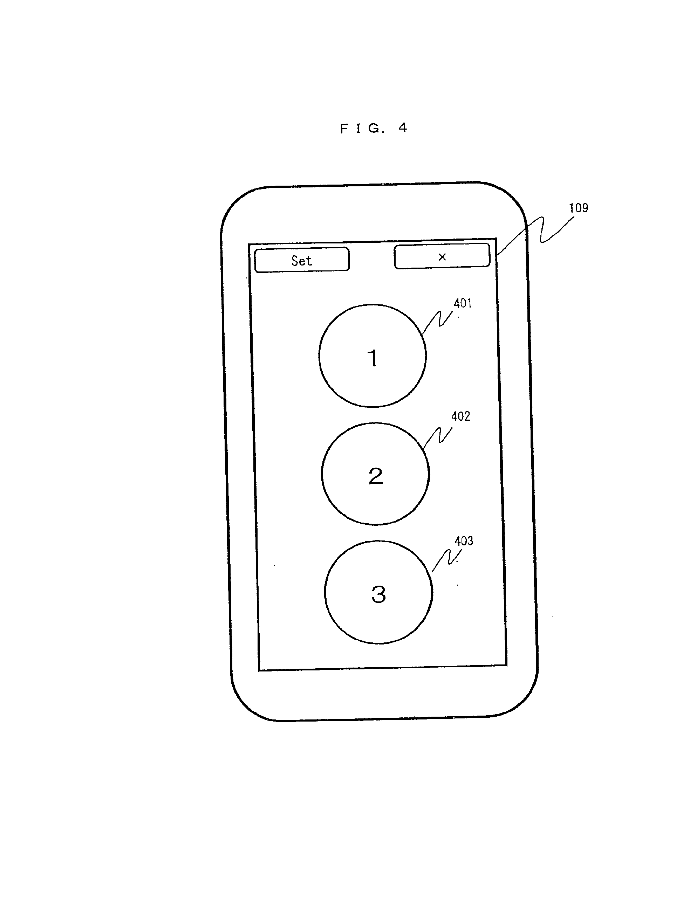

Referring next to FIG. 4, description will be given of the flick section of the information processor in the embodiment. FIG. 4 schematically shows the flick section 109 of the information processor.

In FIG. 4, the flick section 109 includes, for example, three flick buttons 401 to 403. Each button is associated with a plurality of flick commands (operation menu), which will be described later. Although three flick buttons are disposed in the configuration of FIG. 4, a desired number of flick buttons may be arranged. Like in the situation in which icons and windows displayed on the touch panel section 108 are selected and activated through tapping operations, when the user conducts an operation to hold the flick button 401, 402, or 403 in the tapped state, flick commands (operation menu) beforehand associated with the flick button are displayed in the periphery of the flick button by subdividing the periphery into a predetermined number of areas.

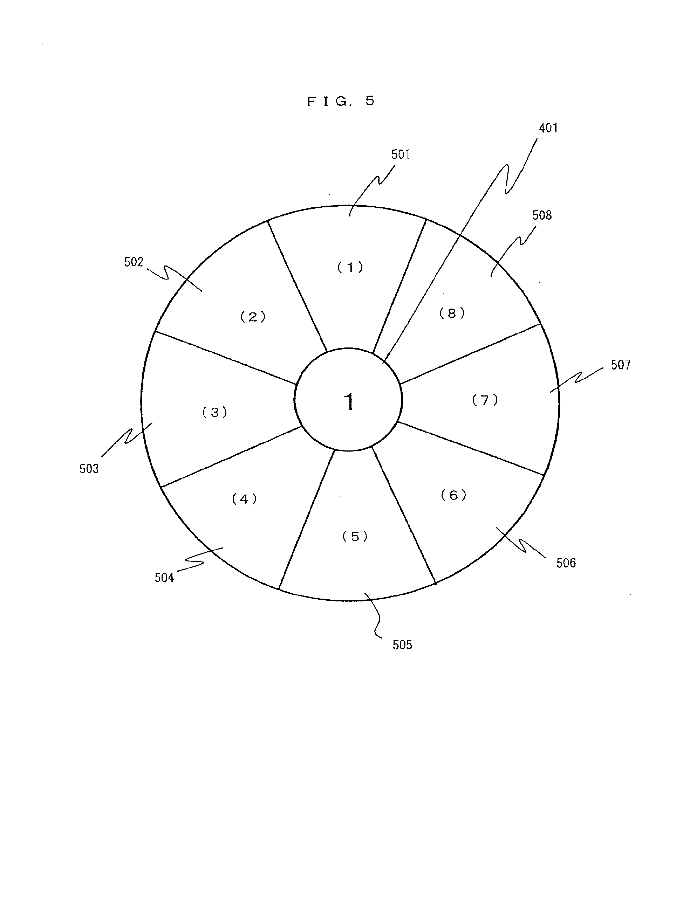

Next, description will be given of a display example of an operation menu displayed in response to an operation to hold the tapped state in the flick section of the information processor in the embodiment. FIGS. 5 to 9 are schematic diagrams to explain display examples of an operation menu displayed in response to an operation to hold the tapped state in the flick section of the information processor.

In FIG. 5, eight flick commands (1) to (8) are beforehand associated with flick button "1" 401. Although not shown, flick commands are beforehand respectively associated with flick button "2" 402 and flick button "3" 403. It is possible for the user to freely establish correspondences between the flick buttons 401 to 403 and the flick commands according to the taste of design and operability of the user. Although eight flick buttons are associated with one flick button in the configuration of FIGS. 5 to 7, a desired number of flick commands may be arranged for each flick button.

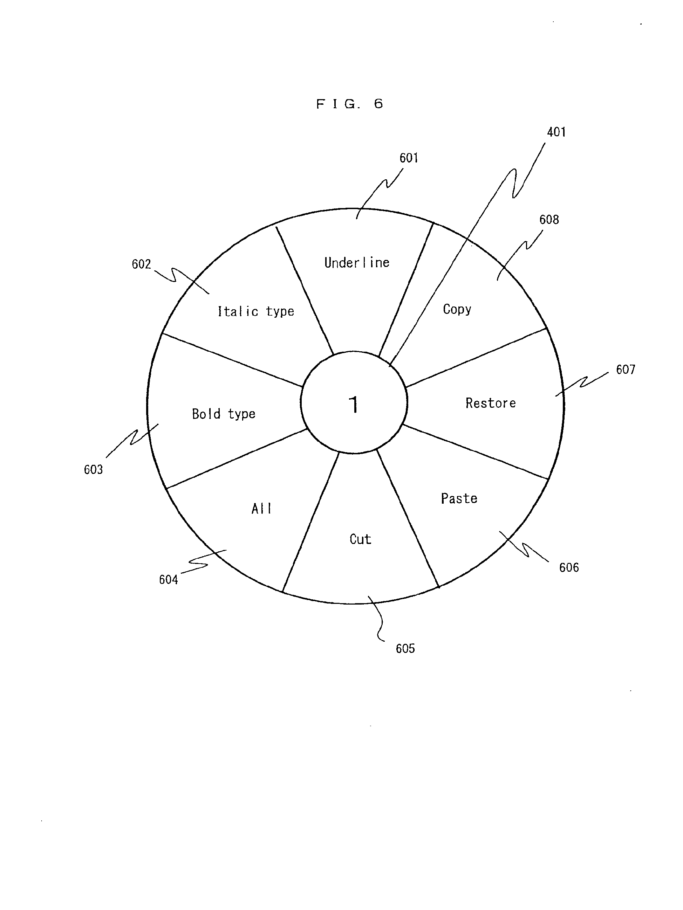

In FIG. 6, specific commands are assigned to eight flick commands (1) to (8) shown in FIG. 5. Assume, for example, a situation in which document creation software has been activated on the touch panel display 111. In the document input screen of the software, to copy part of sentences of a document during an editing operation onto a second location, a target area of the part of sentences is selected through a main operation in which a finger or the like is brought into contact with the touch panel section 108.

Next, when the user conducts an operation to hold flick button "1" 401 of the flick section 109 in the tapped state, the flick commands ranging from underline 601 to copy 608 are displayed in the periphery of flick button (1) 401. With the finger kept in contact with flick button (1) 401, when the user conducts a flick operation to the area of the copy 608 and then removes the finger therefrom, the target area thus selected is copied (subordinate or cooperative operation). Thereafter, by bringing a finger into contact with the touch panel section 108, the user designates the copy destination area onto which the selected sentences are to be copied. With the finger kept in contact with flick button (1) 401, when the user conducts a flick operation to the area of the paste 606 and then removes the finger therefrom, the selected sentences are copied onto the designated area.

That is, in the flick section 109, when an operation to hold a flick button in the tapped state is conducted, the operation menu corresponding to the flick button is displayed in the periphery of the flick button by subdividing the periphery into a predetermined number of subareas. When the user selects an operation menu item from the operation menu thus displayed in the subdivided areas and conducts a flick operation to the area in which the selected operation menu item is displayed and then removes the finger therefrom, the processing associated with the selected operation menu item (coordinates) is executed.

The operation menu indicates flick commands beforehand associated with the flick buttons 401 to 403 such that when the user conducts an operation to hold one of the flick buttons 401 to 403 of the flick section 109 in the tapped state, the flick commands corresponding to the flick button are displayed in the periphery of the flick button.

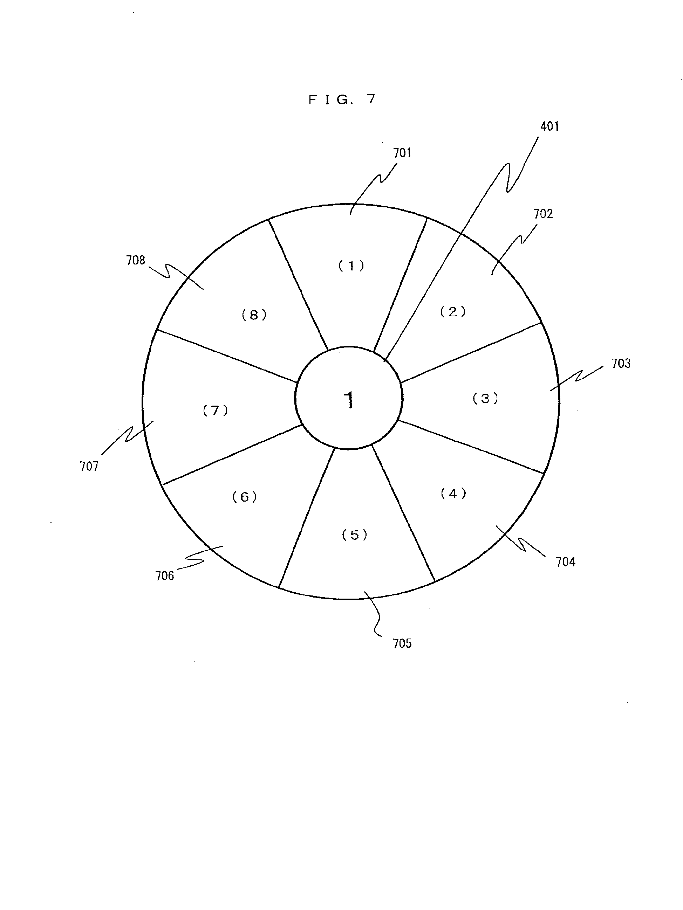

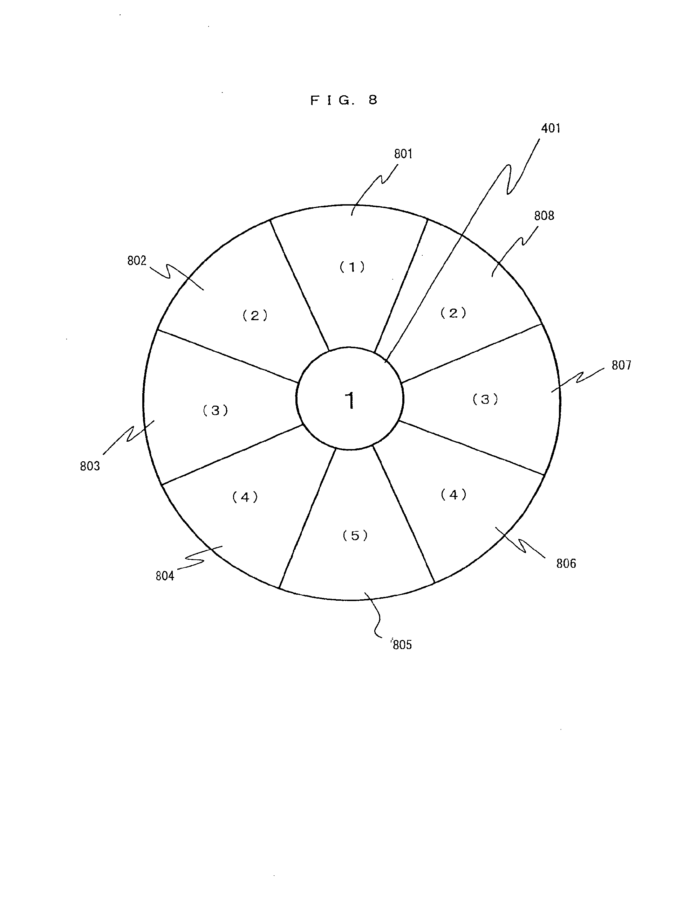

FIG. 7 shows the flick commands corresponding to flick button (1) 401 arranged in the clockwise direction opposing to the counterclockwise direction in which the flick commands (1) to (8) in the periphery of the flick button (1) 401 are arranged in FIG. 5. FIG. 8 shows an arrangement symmetrical about a line drawn lengthwise to pass the center of flick button (1) 401 in FIG. 8 from that shown in FIGS. 5 to 7 in which the flick commands corresponding to flick button (1) 401 are radially arranged. Specifically, the flick commands (1) to (5) corresponding to flick button (1) 401 are arranged to be substantially symmetrical about a line drawn lengthwise to pass the center of flick button (1) 401 in FIG. 8.

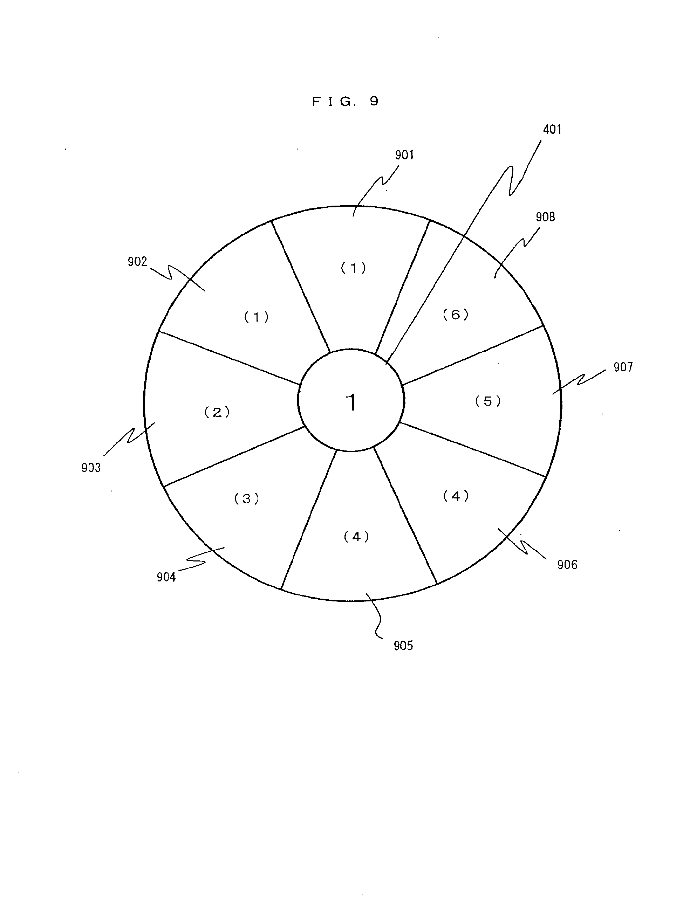

In the initial setting of the personal computer 100, the flick commands may be assigned to each flick button in an asymmetric way such that the assignment of the commands is set in a symmetric way later by the user. As shown in FIG. 9, particular flick commands (flick commands (1) and (4) in FIG. 9) may be larger in the area than the other flick commands. This makes it possible that a user with thick fingers to select the target flick commands without touching the other flick areas. Also, one and the same flick command may be associated with a plurality of flick command areas. This improves operability in the selection of flick commands.

In the arrangement in which the flick section 109 is placed in the right or left side of the touch panel display 111, to facilitate the operation to hold the tapped state of a flick button by a finger of the right or left hand, it is also possible that by operating a changeover button, not shown, the allocation of the flick commands to the flick buttons may be reversed at a time. Specifically, the flick commands on the left side and those on the right side are replaced with each other. Further, to visually indicate a flick button touched by the finger and flick commands, the background of the selected flick button and that of the flick commands under the flick operation may be colored or the colors of the backgrounds may be changed.

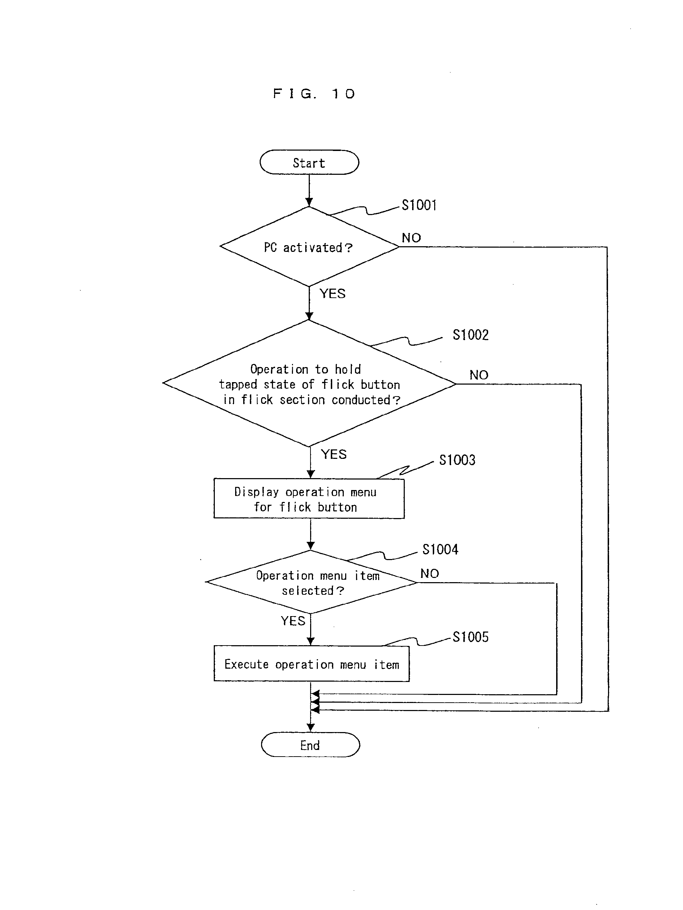

Next, description will be given of an operation of the information processor in the embodiment the present invention. FIG. 10 is a flowchart to explain the operation of the information processor. In FIG. 10, step 1001 (to be abbreviated as S1001 hereinbelow) judges whether or not the PC 100 has been activated. If the PC 100 has not been activated (no in S1001), the processing is terminated. If the PC 100 has been activated (yes in S1001), control goes to S102.

S1002 judges whether or not the operation to hold the tapped state of a flick button of the flick section 109 has been conducted. If the operation has not been conducted (no in S1002), the processing is terminated. If the operation has been conducted (yes in S1002), control goes to S1003.

In S1003, an operation menu corresponding to the flick button for which the operation to hold the tapped state has been conducted is displayed in the peripheral area of the flick button by dividing the peripheral area into a predetermined number of subareas. The operation menu displayed in the subdivided areas includes the flick commands beforehand associated with the flick buttons 401 to 403 such that when an operation to hold the tapped state of one of the flick buttons 401 to 403 of the flick section 109 is conducted, the flick commands associated with the flick button are displayed in the peripheral area of the flick button.

S1004 judges whether or not an operation menu item has been selected. The judgment is conducted based on an event in which an operation to hold the tapped state of a flick button is conducted and a flick operation to an operation menu area is successively carried out and then the finger is removed from the screen. If no operation menu item has been selected (no in S1004), the processing is terminated. If an operation menu item has been selected (yes in S1004), control goes to S1005. In S1005, the operation menu item thus selected is executed. For example, in the example described above, an operation to copy a selected document and an operation to paste the copied document onto a predetermined area are carried out.

The operations of the functional blocks constituting the information processor 100 of the embodiment shown in FIG. 10 may be carried out by programs on a computer. That is, the CPU 106 of the information processor 100 loads therein the programs stored in the storage media such as the ROM 101 and the RAM 102 and then sequentially executes processing steps of the programs.

As described above, in accordance with the present invention, it is possible to improve operability based on intuitive operation of the tablet terminal by including:
a display section for displaying a result of information processing;
a contact detecting section for detecting a contact position in the display section;
a first area display section for displaying a first area in the display section;
a second area display section for displaying second areas, while contact with the first area is being detected by the contact detecting section, in a periphery of the first area in the display section, the second areas being obtained by dividing the periphery into a predetermined number of areas; and
a processing execution section for executing processing when the contact detecting section detects contact with the first area and contact with the second area in succession and detects breaking of contact with the second area, the processing corresponding to coordinates of a position in the second area at which the breaking of contact with the second area is detected.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

## Claims

1. An information processor, comprising:
a display section for displaying a result of information processing;
a contact detecting section for detecting a contact position in the display section;
first area display means for displaying a first area in the display section;
second area display means for displaying second areas, while contact with the first area is being detected by the contact detecting section, in a periphery of the first area in the display section, the second areas being obtained by dividing the periphery into a predetermined number of areas; and
processing execution means for executing processing when the contact detecting section detects contact with the first area and contact with the second area in succession and detects breaking of contact with the second area, the processing corresponding to coordinates of a position in the second area at which the breaking of contact with the second area is detected.

2. An information processor in accordance with claim 1, wherein the first area is kept displayed in any situation in a particular place of the display section.

3. An information processor in accordance with claim 1, wherein the first area is displayed as a semitransparent image in the display section.

4. An information processor in accordance with claim 2, wherein the first area is displayed as a semitransparent image in the display section.

5. An information processor in accordance with claim 1, wherein the first area comprises a predetermined number of buttons, and
while contact with one of the buttons is being detected, the second areas obtained by dividing the periphery into a predetermined number of areas are displayed in the periphery of the button in the display section.

6. An information processor in accordance with claim 2, wherein the first area comprises a predetermined number of buttons, and
while contact with one of the buttons is being detected, the second areas obtained by dividing the periphery into a predetermined number of areas are displayed in the periphery of the button in the display section.

7. An information processor in accordance with claim 3, wherein the first area comprises a predetermined number of buttons, and
while contact with one of the buttons is being detected, the second areas obtained by dividing the periphery into a predetermined number of areas are displayed in the periphery of the button in the display section.

8. An information processor in accordance with claim 4, wherein the first area comprises a predetermined number of buttons, and
while contact with one of the buttons is being detected, the second areas obtained by dividing the periphery into a predetermined number of areas are displayed in the periphery of the button in the display section.

9. An information processor in accordance with claim 5, wherein for each of the buttons, second areas obtained by dividing a periphery of the button into a predetermined number of areas are beforehand associated with the button.

10. An information processor in accordance with claim 6, wherein for each of the buttons, second areas obtained by dividing a periphery of the button into a predetermined number of areas are beforehand associated with the button.

11. An information processor in accordance with claim 7, wherein for each of the buttons, second areas obtained by dividing a periphery of the button into a predetermined number of areas are beforehand associated with the button.

12. An information processor in accordance with claim 8, wherein for each of the buttons, second areas obtained by dividing a periphery of the button into a predetermined number of areas are beforehand associated with the button.

13. A control method for use with an information processor comprising a display section for displaying a result of information processing, comprising the steps of:
detecting a contact position in the display section;
displaying a first area in the display section;
displaying second areas, while contact with the first area is being detected by the contact detecting step, in a periphery of the first area in the display section, the second areas being obtained by dividing the periphery into a predetermined number of areas; and
executing processing when the contact detecting step detects contact with the first area and contact with the second area in succession and detects breaking of contact with the second area, the processing corresponding to coordinates of a position in the second area at which the breaking of contact with the second area is detected.

14. A program for making a computer of an information processor comprising a display section for displaying a result of information processing execute:
processing for detecting a contact position in the display section;
processing for displaying a first area in the display section;
processing for displaying second areas, while contact with the first area is being detected by the processing for detecting a contact position, in a periphery of the first area in the display section, the second areas being obtained by dividing the periphery into a predetermined number of areas; and
processing for executing processing when the processing for detecting a contact position detects contact with the first area and contact with the second area in succession and detects breaking of contact with the second area, the processing corresponding to coordinates of a position in the second area at which the breaking of contact with the second area is detected.
